# EUROPÄISCHE PATENTSCHRIFT

(11) **EP 1 811 191 B1**
(45) Veröffentlichungstag und Bekanntmachung des Hinweises auf die Patenterteilung: **16.07.2008**
(21) Anmeldenummer: 07009454.5
(22) Anmeldetag: 25.11.2006
(51) Int. Cl.: F16D 3/38, F16C 21/00

(54) **Kreuzgelenkanordnung**
Universal joint arrangement
Agencement de joint de transmission articulé

(30) Priorität: 08.12.2005 DE 102005058742
(43) Veröffentlichungstag der Anmeldung: 25.07.2007
(62) Teilanmeldung aus: 06024474.6
(73) Patentinhaber: Voith Turbo GmbH & Co. KG, 89522 Heidenheim (DE)
(72) Erfinder: Grawenhof, Peter, 89547 Dettingen (DE)
(74) Vertreter: Dr. Weitzel & Partner

(56) Entgegenhaltungen:
- EP-A1- 1 001 182
- EP-A1- 1 167 796

## Beschreibung

Die Erfindung betrifft eine Kreuzgelenkanordnung, im Einzelnen mit den Merkmalen aus dem Oberbegriff des Anspruches 1.

Kreuzgelenkanordnungen, insbesondere die Lagersysteme zur Lagerung von Zapfen eines Zapfenkreuzes in Gelenkgabeln für den Einsatz in Gelenkwellen sind in einer Vielzahl von Ausführungen für eine Vielzahl von Einsatzbeispielen bekannt. Stellvertretend wird dazu auf die Druckschrift G 1757 d 08/02 1.000, "FEM-Simulation von Gelenkwellen mit inkompatiblen Netzen", verwiesen, in der das Problem der Verformungen an den Lager- und Anschlusselementen unter Belastung offenbart wird.

Bekannt sind Ausführungen von Kreuzgelenkanordnungen für Gelenkwellen, welche wenigstens ein Zapfenkreuz umfassen, welches in wenigstens einer Gelenkgabel gelagert wird. Die Gelenkgabel selbst kann einteilig oder zweiteilig ausgeführt sein. Zur Anbindung des Zapfenkreuzes in der Gelenkgabel ist jeweils für den einzelnen Zapfen eine entsprechende Lageranordnung vorgesehen. Die Lageranordnung umfasst dabei wenigstens ein Radiallager und ein Axiallager. Für die Anordnung des Axiallagers bestehen eine Vielzahl von Möglichkeiten, wobei jedoch unter Berücksichtigung der auftretenden Verformungen während des Betriebes der Gelenkwelle eine entsprechende konstruktive Auslegung der einzelnen Elemente der Lagerung erfolgt. Die Problematik einer derartigen Lageranordnung besteht darin, dass die einzelnen Wälzlager neben einem hohen Grunddrehmoment zusätzlich durch hohe Drehmomentstöße und gleichzeitige Querbeschleunigungen, insbesondere beim Einsatz in Walzwerksantrieben, beansprucht werden. Diese Belastungen führen zu elastischen Verformungen der Gelenkgabel sowohl im Bereich der Flansche als auch innerhalb des Gabelauges. Im Reversierbetrieb treten die Verformungen zusätzlich mit positivem oder negativen Wert auf. Diese betriebs- sowie konstruktionsbedingten Einflüsse ergeben Fluchtungsfehler mit einer ungünstigen Lasteinleitung in das Lager, nämlich einen Mittenversatz der Gabelbohrung, Schrägstellung der Bohrung, Durchbiegung des Zapfens sowie ein Radialspiel im Wälzlager und die Einfederung des Wälzlagers, wie in der Druckschrift G 17 57 Abb. 12 offenbart.. Die Folge ist dabei eine ungleichmäßige radiale Druckverteilung in der Lagerbohrung, wodurch örtlich hohe Belastungen an den Kontaktstellen der Wälzkörper des Radiallagers und überhöhte Kantenspannungen entstehen. Aus den elastischen Verformungen resultieren außerdem Relativbewegungen zwischen Zapfen und Gabelbohrung in axialer Richtung. Werden diese Relativbewegungen durch eine zu steife Lagereinbettung behindert, entstehen hohe Zwangskräfte und damit hohe Belastungen im Wälzkontakt der Axiallager. Dies führt in einem Segment des Axiallagers zu hohen Kantenspannungen und in dem gegenüberliegenden Segment zum Abheben der Rollen. Die ungleiche Belastung führt zu einer Tragfähigkeitsminderung. Die konstruktive Ausführung, insbesondere die Auslegung der einzelnen Bauelemente, ist dabei immer auf die möglicherweise auftretenden Verformungswege abzustimmen. Es ist nicht möglich, unabhängig von der Kenntnis dieser Einflüsse eine befriedigende Konstruktion bereitzustellen.

Eine Lösung dieser Problematik ist aus der Druckschrift EP 1 167 796 B1 bekannt. Diese ist durch die besondere Ausgestaltung einer Axiallagerlauffläche an einem Druckring charakterisiert. Hier wird allein durch die Ausgestaltung des Druckringes aufgrund des abgetragenen Materials ein Freiweg für die Wälzelemente bzw. Gleitflächen geschaffen Der Nachteil dieser Ausführung besteht darin, dass sich der erforderliche Weg somit nicht elastisch einstellen kann, sondern über die Formgebung, welche durch den Materialabtrag bestimmt ist, vorgegeben wird. Dadurch ist für unterschiedliche Belastungen, insbesondere im Teillastbereich ein vollständiger Formschluss nicht gegeben und die negativen Folgen der Ausführung gemäß dem Stand der Technik können nicht ganz ausgeschlossen werden. Die aus dieser Druckschritt EP 1 167 796 B1 bekannten Merkmale sind im oberbegriff von Anspruch 1 zusammengefasst. Aus DE 195 10 761 B4 ist eine Ausführung eines Zapfenlagers in Buchsenausführung vorbekannt, welches ein als Kunststoffscheibe ausgebildetes Anlaufelement besitzt. Dieses ist jedoch ohne weitere Maßnahmen nicht in der Lage, die erforderlichen Ausgleichswege zur Verfügung zu stellen. Ferner wird noch auf die EP 1 001 182 A1 verwiesen. Der Erfindung liegt daher die Aufgabe zugrunde, ein Lagersystem für Kreuzgelenkanordnungen der eingangs genannten Art, insbesondere für den Einsatz in schweren Gelenkwellen derart weiterzuentwickeln, dass die genannten Nachteile vermieden werden, d. h. dieses einen einfachen Aufbau sowie eine geringe Anzahl von Bauelementen aufweist. Die Ausschaltung der negativen Einflüsse bei Verformung der drehmomentübertragenden Bauteile auf die Lageranordnung, insbesondere das Axiallager soll dabei ohne Kenntnis der konkreten Lastfälle des Einzelfalles mit einer möglichst standardisierten Lösung völlig oder zumindest nahezu ausgeschlossen werden können. Die Kreuzgelenkanordnung, insbesondere das Lagersystem und dessen Einzelelemente sollen sich dabei durch einen geringen konstruktiven und fertigungstechnischen Aufwand sowie niedrige Kosten auszeichnen.

Die erfindungsgemäße Lösung ist durch die Merkmale des Anspruches 1 charakterisiert. Vorteilhafte Ausgestaltungen sind jeweils in den Unteransprüchen beschrieben.

Eine Kreuzgelenkanordnung umfasst zwei zueinander um 90° versetzt zueinander angeordnete Gelenkgabeln. In diesen wird ein Zapfenkreuz gelagert. Jede Gelenkgabel weist dazu einen Flanschteil und zwei Lagerteile auf, wobei die auf einer gemeinsamen Achse liegenden Zapfen des Zapfenkreuzes jeweils in den beiden Lagerteilen in einer Lagerbohrung gelagert werden. Zur Lagerung ist für jeden Zapfen ein entsprechendes Lagersystem bzw. eine Lageranordnung vorgesehen, die mindestens ein Radiallager und ein Axiallager umfasst, wobei das Axiallager entweder im Bereich der Zapfenwurzel oder an der Zapfenstirnseite angeordnet ist. Das Axiallager kann dabei als Gleitlager oder Wälzlager ausgeführt sein. Dieses stützt sich dabei erfindungsgemäß über ein Ausgleichselement in Form einer teilelastischen Federeinheit 2 am Zapfenkreuz oder der Gelenkgabel wenigstens mittelbar ab, d. h. direkt oder indirekt. Zwischengeschaltet kann somit beispielsweise ein Druckring sein.

Teilelastisch bedeutet, dass das Ausgleichselement unter hohen Belastungen die aufgrund der durch die Umfangskräfte bedingten Zwangskräfte erzeugten Verformungen der Lagerumgebung kompensiert. Teilelastisch bedeutet ferner, dass das Ausgleichselement in den Bereichen, die in Einbaulage in Bereichen geringer Verformung liegen, steif ausgeführt ist und in den Bereichen höherer Verformung elastisch: Die, Teilelastizität beinhaltet somit Bereiche unterschiedlicher Steifigkeit bzw. unterschiedlicher Elastizitäten. Dadurch wird gewährleistet, dass sich das System unter Last elastisch einstellen kann, im lastfreien Zustand jedoch eine axial steife Übertragung gegeben ist. Diese werden dabei durch in Umfangsrichtung einander benachbart angeordnete Bereich aus unterschiedlichen Materialien oder Materialkombinationen erzeugt, wobei sich die Materialien hinsichtlich ihres E-Moduls unterscheiden.

Das Ausgleichselement kann durch die stoffschlüssige Verbindung von Einzelelementen aus unterschiedlichen Werkstoffen bzw. Materialkombinationen mit unterschiedlichen Steifigkeiten hergestellt werden Zusätzlich können die unterschiedlichen Elastizitäten durch Änderung der Querschnittsgeometrie erzeugt werden.

Erfindungsgemäß ist die teilelastische Federeinheit derart ausgebildet, dass diese vorzugsweise als ringförmiges Element oder ringförmiges Element mit beliebiger Innenkontur ausgebildet ist, wobei der elastische Bereich mit einem Elastizitätsmodul zwischen 5000 bis 50000 N/mm², vorzugsweise 5000 bis 20000 N/mm² ausgeführt ist. Dabei ist das ringförmige Element in Umfangsrichtung in Bereiche höherer Steifigkeit und geringerer Steifigkeit unterteilt. Die Steifigkeitsdifferenzen können dabei zusätzlich durch eine elastische Formgebung realisiert werden. Erfindungsgemäß sind diese Bereiche durch die Verwendung von Materialien bzw. 5 Materialkombinationen mit unterschiedlichen E-Modulen charakterisiert. Die Bereiche in Einbaulage, die bei Drehmomentübertragung einer stärkeren natürlichen Verformung entgegenwirken und dadurch einer höheren Belastung unterliegen, sind insbesondere durch geringere Querschnittsgrößen und durch weichere Materialien charakterisiert als die Bereiche höherer Steifigkeit.

Die Querschnittsvergrößerung erfolgt dabei im Wesentlichen in Einbaulage in vertikaler Richtung, d. h. für das ringförmige Element betrachtet in Höhenrichtung und optional zusätzlich in Dickenrichtung. Bezüglich der konkreten Wahl der verwendeten Querschnitte bestehen keine Restriktionen. Vorzugsweise wird jedoch zur Gewährleistung eines flächigen Anliegens entsprechend des gewählten Materials des ringförmigen Elementes der elastischen Federeinheit ein rechteckiger Querschnitt bzw. eine Querschnittsgeometrie mit wenigstens einer ebenen Fläche, vorzugsweise zwei einander gegenüberliegend angeordneten Flächen gewählt. Das ringförmige Element ist zumindest durch einen Außendurchmesser charakterisiert. Die Innenkontur kann durch einen oder mehrere unterschiedliche Innendurchmesserbereiche oder eine beliebige Geometrie charakterisiert sein. Letztere Variante kommt dann zum Tragen, wenn durch eine entsprechend komplementäre Kontur an den Anschlusselementen eine lagerorientierte Zentrierung gewünscht ist, die die Einbaulage fest vorgibt.

Die elastische Federeinheit, insbesondere das ringförmige Element, kann dabei aus einem Stahl, insbesondere Federstahl, Vergütungsstahl, etc., einem Elastomer oder einem Kunststoff (Elastomer, Gummi) oder einem gummielastischen Element bestehen. Entscheidend ist, dass unter Belastung immer ein Formschluss erzeugt wird, wobei ein vollständiger Formschluss zwischen der zum Axiallager gewandten Stirnseite der elastischen Federeinheit und dem das Axiallager abstützenden Element oder dem Axiallager selbst gegeben ist.

Vorzugsweise ist das ringförmige Element symmetrisch aufgebaut, so dass der Einbau unabhängig von der Drehrichtung der mit dem Zapfenkreuz gekoppelten Welle erfolgen kann. Dabei wird das ringförmige Element der elastischen Federeinheit in einer Ansicht von oben betrachtet ausgehend vom theoretischen Mittelpunkt in radialer Richtung in zwei symmetrische Ringsegmente unterteilt. Von einer ersten durch den Mittelpunkt verlaufenden Symmetrieachse ausgehend erstreckt sich dabei jeweils ein erster Abstützbereich beidseitig in Umfangsrichtung in Richtung zu einer senkrecht zur Symmetrieachse durch den Mittelpunkt verlaufenden weiteren Symmetrieachse. Dieser erste Abstützbereich ist durch einen konstanten Querschnittsverlauf charakterisiert. An den ersten schließt sich jeweils ein zweiter Bereich an, der als zweiter teilaktiver Abstützbereich bezeichnet wird. Dieser ist im entlasteten Zustand weitestgehend passiv, unter Belastung legt dieser sich jedoch aufgrund der Materialeigenschaft und der Querschnittgestaltung an das Axiallager, insbesondere die Gleitfläche oder das Laufbahn bildende Element formschlüssig, d.h. flächig, an, indem der aktive Abstützungsbereich gleich steif bleibt und der teilelastische sich anpasst. Dabei erfolgt erfindungsgemäß die Querschnittsänderung gleichmäßig über die gesamte Breite bzw. Dicke des ringförmigen Elementes und ferner in Höhenrichtung jeweils über einen Teilbereich in Umfangsrichtung. Lediglich die Übergänge zwischen den unterschiedlichen Querschnitten erfolgen vorzugsweise nicht abrupt, sondern durch eine gleichmäßige Querschnittsänderung in Richtung zum jeweils verkleinerten oder vergrößerten Querschnitt hin.

Der Einsatz der erfindungsgemäß gestalteten elastischen Federeinheit in einer Kreuzgelenkanordnung, insbesondere im Lagersystem zur Lagerung eines Zapfens in einer Gelenkgabel, ermöglicht damit sowohl im Leerlauf, d. h. lastfreiem Betrieb auch im belasteten Zustand ein einfach zu realisierendes Ausgleichselement bei Verkippung der die Axiallagerlaufbahnen oder Gleitflächen bildenden Elemente durch die stetige Gewährleistung eines flächigen Anliegens an die diese abstützenden Elemente durch flächiges Anliegen des teilaktiven Abstützbereiches. Damit kann insbesondere beim Einsatz eines Axiallagers in Form eines Wälzlagers ein gutes Tragbild erzielt werden. Dies gilt in Analogie auch für Axiallager in Gleitlagerausführung, dessen Gleitflächen gleichmäßiger belastet werden.

Bezüglich der Ausbildung und/oder Anordnung der die ersten Abstützbereiche und die zweiten teilaktiven Abstützbereiche bildenden unterschiedlichen Querschnittsbereiche bestehen eine Vielzahl von Möglichkeiten, welche sich hinsichtlich der Erstreckung vorzugsweise in Umfangsrichtung unterscheiden können. Dabei erfolgt die Erstreckung jeweils beidseitig einer ersten Symmetrieachse im gleichen Abstand von dieser Symmetrieachse aus in Umfangsrichtung, d. h. dass jeweils ein Segmentbereich beidseitig einer ersten Symmetrieachse in einem bestimmten Abstand zur Symmetrieachse mit dem vergrößerten Querschnitt vorgesehen ist. Dies gilt dann auch für den zweiten teilaktiven Abstützbereich. Dieser ist ebenfalls symmetrisch bezogen auf die erste Symmetrieachse angeordnet und schließt sich an den bzw. die ersten Abstützbereiche an. Vorzugsweise erfolgt die Unterteilung Quadrantenweise. Die symmetrische Ausführung ermöglicht die gleiche Wirkung auch im Reversierbetrieb.

Die erfindungsgemäße Lösung ist sowohl für Ausführungen mit im Bereich der Zapfenwurzel angeordneten Axiallager als auch mit im Bereich der Zapfenstirnseite angeordneten Axiallager einsetzbar. Im erstgenannten Fall stützt sich dabei das das Axiallager bildende scheibenförmige Element bei Ausbildung als Gleitlager oder aber ein eine Axiallagerlaufbahn bildendes Element entweder direkt oder über weitere Elemente unter Zwischenschaltung der teilelastischen Federeinheit an der Zapfenwurzel ab. Im erstgenannten Fall ist zwischen Axiallager und Zapfenwurzel das teilelastische Element vorgesehen. Im zweiten Fall ist zwischen dem Axiallager bzw. dem eine Lauffläche oder eine Gleitfläche bildendes Element und der Zapfenwurzel ein weiteres Element, beispielsweise in Form eines Druckringes, vorgesehen, wobei sich das Axiallager über die teilelastische Federeinheit an diesem Druckring und über diesen an der Zapfenwurzel abstützt. Die jeweils andere Lauffläche bzw. Gleitfläche stützt sich dabei wenigstens mittelbar an der Gelenkgabel ab. Die Abstützung erfolgt beispielsweise über den Radiallageraußenring.

Bei der Anordnung an der Zapfenstirnseite können mehrere Varianten der erfindungsgemäßen Lösung unterschieden werden. Diese sind im wesentlichen dadurch charakterisiert, an welchem der Anschlusselemente das Axiallager bzw. das eine Gleitfläche und/oder eine Lauffläche bildende Element sich abstützt. Diesbezüglich werden folgende Möglichkeiten unterschieden:
a) Anlage an der Zapfenstirnseite
b) Anlage an der Lagerbohrung
c) Anlage an einem Anschlusselement, insbesondere der Radiallageraußenringbüchse
d) Anlage an einem der Elemente a) bis c) und Anlage der jeweils gegenüberliegenden Gleit- oder Lauffläche über ein Zwischenelement zur Lagerorientierung.

Auch in diesem Fall ist das Ausgleichselement in Form der teilelastischen Federeinheit im wesentlichen ringförmig ausgebildet, wobei bei gewünschter Lagerorientierung die Innenkontur nicht durch einen Durchmesser charakterisiert ist, sondern durch andere Geometrien, die mit komplementären Geometrien in Form von Vorsprüngen am Anschlusselement zusammenwirken.

Die erfindungsgemäße Lösung ist für Kreuzgelenkanordnungen mit geschlossener Gelenkgabelausführung, d.h. Lagerbohrung in Form einer Blindbohrung als auch Durchgangsöffnung denkbar. Ferner ist es unerheblich, ob die Gelenkgabel in geteilter Ausführung vorliegt. Des weiteren kann die erfindungsgemäße Lösung für Kreuzgelenkanordnungen mit Zapfenkreuzen mit in einer Ebene angeordneten Zapfenachsen oder aber auch Zapfenkreuze mit in zueinander in parallelen Ebenen versetzt angeordneten Zapfenachsen angewandt werden.

Eine mögliche erfindungsgemäße Lösung mit zusätzlich zu unterschiedlichen Materialen in Umfangsrichtung der teilelastischen Federeinheit vorgesehenen Querschnittsvariationen wird nachfolgend anhand von Figuren erläutert. Darin ist im Einzelnen Folgendes dargestellt:
- Figur 1: verdeutlicht anhand eines Ausschnittes aus einem Axialschnitt eine erfindungsgemäß gestaltete Kreuzgelenkanordnung;
- Figur 2: verdeutlicht anhand einer perspektivischen Ansicht eine besonders vorteilhafte Ausgestaltung einer teilelastischen Federeinheit;
- Figuren 3a bis 3e: verdeutlichen in schematisch vereinfachter Darstellung Anordnungen der teilelastischen Federeinheit bei Anordnung des Axiallagers im Bereich der Zapfenstirnseite;
- Figuren 4a bis 4c: verdeutlichen Ausführungen zur Realisierung einer Zentrierfunktion;
- Figur 5: verdeutlicht die Auswirkungen der Verformung einer Gelenkgabelhälfte unter Belastung gemäß einer Ausführung aus dem Stand der Technik.

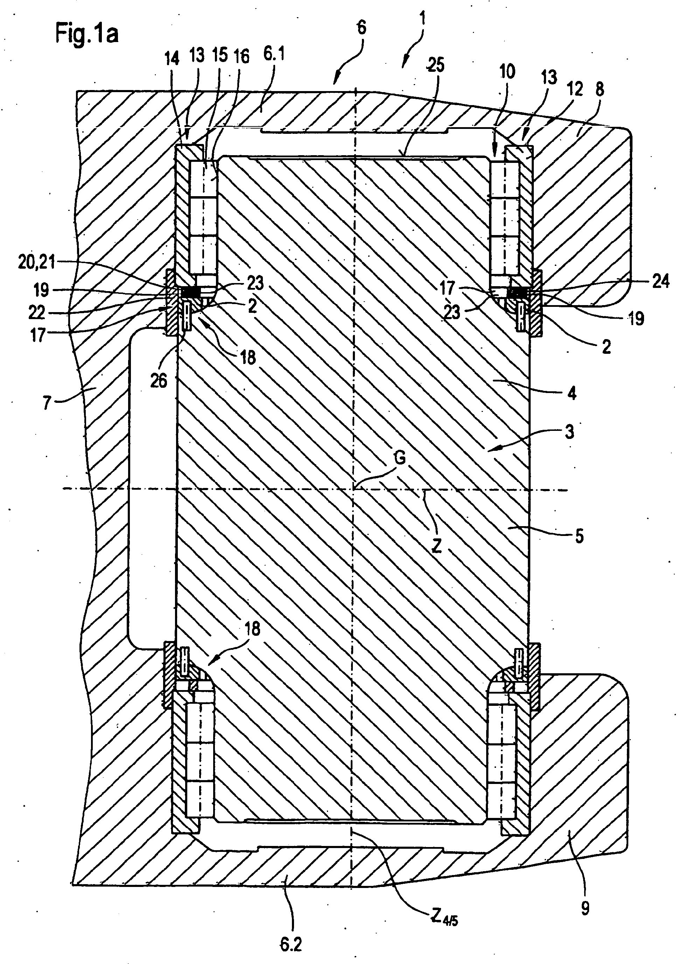

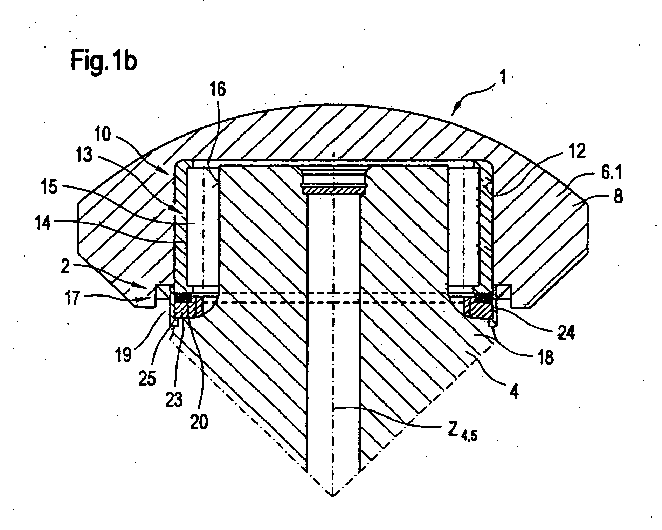

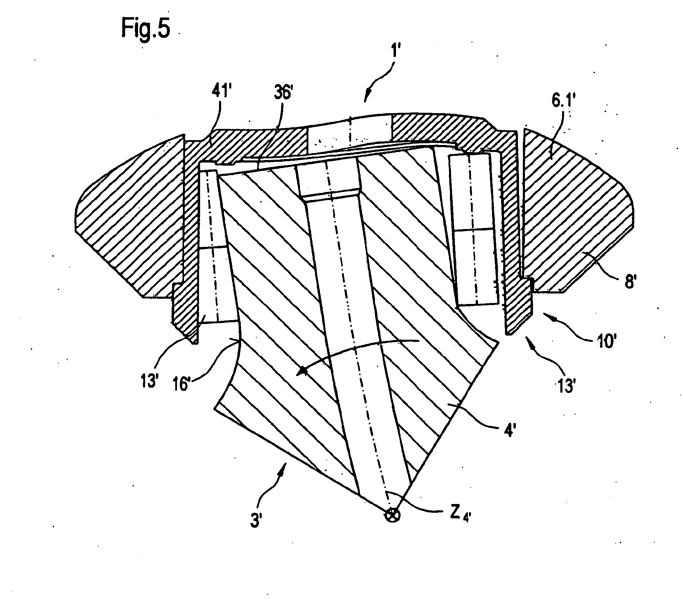

Die Figur 5 veranschaulicht zur Verdeutlichung in stark übertriebener Darstellung die der erfindungsgemäßen Lösung zugrundeliegende Problematik der Auswirkung der Verformungen auf das Lagersystem eines Zapfenkreuzes 3' einer Gelenkgabel 6' anhand eines Ausschnittes aus einem Axialschnitt durch das Zapfenkreuz 3'. Dargestellt ist beispielhaft ein Zapfen 4', welcher über ein Lagersystem 10' in einer Gelenkgabelhälfte 6.1' gelagert ist. Erkennbar ist ferner ein Lagerteil 8' der Gelenkgabelhälfte 6.1'. Das Lagersystem 10' umfasst ein Radiallager 13'. Im dargestellten Fall wird die innere Laufbahn der Wälzelemente 15' des Radiallagers 13' vom Außenumfang 16' des Zapfens 4' gebildet. Die äußere Lauffläche wird von einer Lagerbuchse 41' gebildet. Bei Drehmomentübertragung bewirkt die Umfangskraft eine ungleichmäßige Belastung des Radiallagers 13', d. h. in Rotationsrichtung sehr hohe Kantenspannungen und auf der gegenüberliegenden Seite ein Spiel zwischen den Wälzelementen 15' und den Anschlusselementen Lagerbuchse 45' bzw. Zapfen 4'. Dies gilt in Analogie auch für ein hier im Einzelnen nicht dargestelltes Axiallager, welches gemäß der Ausführung von Figur 1 beispielsweise zwischen Zapfenstirnseite 36' und Innenumfang der Lagerbuchse 41' angeordnet wäre. Dieses würde ebenfalls ungleichmäßig belastet werden.

Erkennbar ist, dass ein Axialgleitlager bei Anordnung an der Zapfenstirnseite 36' in Rotationsrichtung betrachtet im Bereich einer Ebene, die senkrecht zu einer Ebene verläuft, die von der Zapfenachse Z₄ und der Gelenkgabelachse G aufgespannt wird, nicht trägt, während der gegenüberliegende Bereich sehr hohen Kräften ausgesetzt ist.

Die Figur 1 a verdeutlicht in schematisch vereinfachter Darstellung anhand eines Ausschnittes aus einem Axialschnitt durch eine Kreuzgelenkanordnung 1 die Integration eines erfindungsgemäß gestalteten Ausgleichelementes in Form einer teilelastischen Federeinheit 2. Figur 1b verdeutlicht einen Ausschnitt aus Figur 1 a. Die Kreuzgelenkanordnung 1 umfasst dazu ein Zapfenkreuz 3, welches mit seinen um 180° zueinander versetzt angeordneten Zapfen 4 und 5 in einer Gelenkgabel 6, umfassend einen Flanschteil 7 und zwei Lagerteile 8 und 9 in den Lagerteilen 8 und 9 jeweils über ein Lagersystem 10 und 11 gelagert ist. Die beiden Zapfen 4 und 5 sind dabei durch eine gemeinsame Zapfenachse Z₄,₅ charakterisiert. Das Zapfenkreuz 3 umfasst ferner um 90° versetzt zu den Zapfen 4 und 5 angeordnete Zapfen, die in einer weiteren hier nicht dargestellten Gelenkgabel gelagert sind, wobei die Gelenkgabel ebenfalls ein Flanschteil und zwei Lagerteile umfasst und die Zapfen in den Lagerteilen über ein entsprechendes Lagersystem gelagert sind. Die Gelenkgabel 6 ist dazu vorzugsweise zweiteilig ausgeführt. Die Teilung erfolgt im Flanschteil 7, wobei die einzelnen Gelenkgabelhälften 6.1 und 6.2 dann durch einen Flanschteil 7.1 und 7.2 charakterisiert sind und jede Gelenkgabelhälfte 6.1 und 6.2 ein Lagerteil umfassen. Hier ist die Gelenkgabelhälfte 6.2 in Form des Lagerteiles 9 dargestellt. Die Lagerung in den Lagerteilen 8 und 9 erfolgt in Lagerbohrungen, hier beispielhaft nur für die Gelenkgabelhälfte 6.1, insbesondere den Lagerteil 8, dargestellt. Die Lagerbohrung ist mit 12 bezeichnet. Die zu den in der Gelenkgabel 6 gelagerten Zapfen 4 und 5 um 90° versetzt angeordneten Zapfen des Zapfenkreuzes 3 sind wie bereits ausgeführt in einer weiteren, hier im Einzelnen nicht dargestellten Gelenkgabel gelagert. Die Gelenkgabel ist dabei beispielsweise mit einem, hier nicht dargestellten Maschinenteil der Antriebsseite und die hier nicht dargestellte Gelenkgabel für die anderen Zapfen des Zapfenkreuzes 3 mit einem Maschinenteil der Abtriebsseite gekoppelt. Die Zapfenachsen Z_{4,5} und die Zapfenachse Z der hier nicht dargestellten Zapfen können dabei wie dargestellt in einer Ebene oder in zwei zueinander versetzten parallel angeordneten Ebenen angeordnet sein. Das einzelne Lagersystem 10 umfasst ein Radiallager 13. Das Radiallager 13 ist vorzugsweise als Wälzlager ausgeführt. Dieses umfasst beispielsweise einen Außenring 14 und Wälzelemente 15. Die innere Lauffläche für die Wälzelemente 15 wird beispielsweise vom Außenumfang 16 des im Lagerteil 8 gelagerten Zapfens 4 gebildet. Des Weiteren umfasst das Lagersystem 10 ein Axiallager 17. Das Axiallager 17 ist gemäß einer ersten Ausführung im Bereich der Zapfenwurzel 18 des Zapfens 4 angeordnet. Dieses kann als Wälzlager oder aber beispielsweise auch als Gleitlager ausgeführt sein. Im dargestellten Fall ist das Axiallager 17 als Gleitlager 19 ausgeführt. Das Gleitlager 19 umfasst dabei ein scheibenförmiges Element 20, welches mit den Anschlusselementen Gleitpaarungen bildet. Dabei werden die einzelnen Gleitflächen bildenden Elemente 21 und 22 der Gleitpaarung 20 beispielsweise vom Außenring 14 des Radiallagers 13 und dem scheibenförmigen Element 20 gebildet werden. Das scheibenförmige Element 20 stützt sich im dargestellten Fall auf einem Druckring 23 über eine wenigstens teilelastische Federeinheit 2 am Zapfenkreuz 3, insbesondere am Zapfen 4 ab. Denkbar wäre auch die Ausbildung des Axiallagers 17 als Wälzlager. In diesem Fall würde dieses Wälzelemente umfassen, die sich an einer zur Gelenkachse G, unter welcher die Achse durch den in einer Ebene gelegten Schnittpunkt der Zapfenachsen Z_{4,5} und Z zu verstehen ist, gerichteten Stirnfläche 24 des Außenringes 14 des Radiallagers 13 abstützen. Dabei kann die zur Gelenkachse G gerichtete Stirnfläche 24 des Außenringes 14 des Radiallagers 13 direkt die äußere Lauffläche für die Wälzelemente des Axiallagers 17 bilden. Denkbar ist es auch, dass diese Stirnfläche 24 die Abstützfläche für das die Lauffläche bildende Element bildet. Die innere Lauffläche ist bei Betrachtungsweise von der Gelenkachse G in Richtung zur Stirnfläche 25 des Zapfens 4 entgegen dieser ausgerichtet und kann dann direkt vom Druckring 23 gebildet werden oder aber einem separaten, eine Lauffläche bildenden Element, welches sich über den Druckring 23 abstützt. Zur Erleichterung der Einfederung und zur Vermeidung von Verschiebungen in Umfangsrichtungen ist der teilelastischen Federeinheit 2 eine Zentriereinheit 26 zugeordnet, welche beispielsweise von einem Dichtungshalter gebildet wird, der am Zapfen 4 bzw. am Zapfen 3 befestigt wird. Entscheidend ist, dass eine Zentrierung gegenüber dem Zapfen 4 in Umfangsrichtung erfolgt.

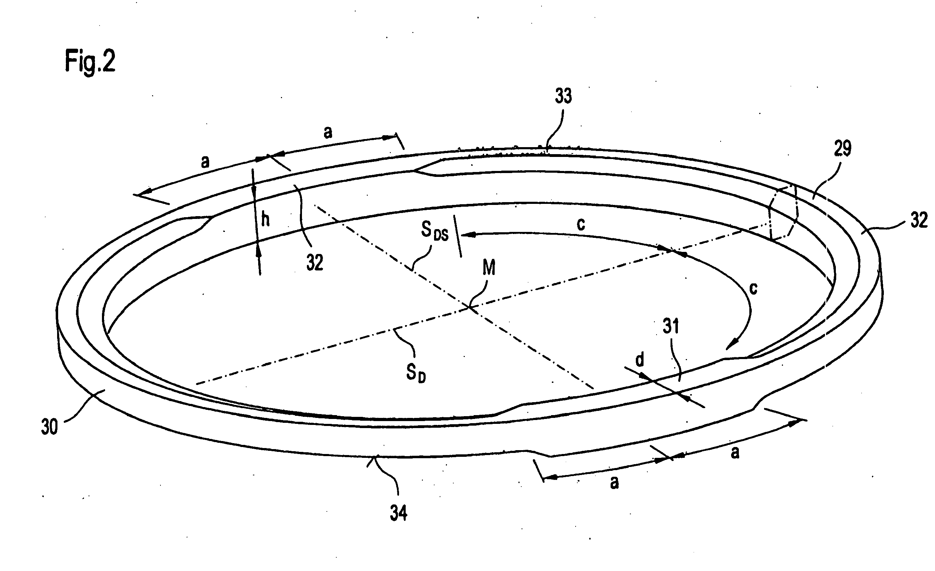

Die konkrete Ausführung der teilelastischen Federeinheit 2 ist beispielhaft in der Figur 2 wiedergegeben. Diese verdeutlicht dabei eine perspektivische Ansicht mit strichpunktierter Darstellung der Querschnittsverläufe. Aus der Figur 2 wird dabei ersichtlicht, dass die teilelastische Federeinheit 2 als ringförmiges Element 28 ausgebildet ist. Je nach Werkstoffwahl ist dieses aus einem Federstahl oder als Elastomer oder gummielastisches Element ausgeführt. Entscheidend ist, dass das gummiförmige Element von seiner Materialwahl bereits eine Elastizität aufweist, die durch ein E-Modul im Bereich von 5000 bis 50000 N/mm², vorzugsweise 5000 bis 20000 N/mm² charakterisiert ist. Die teilelastische Federeinheit 2 ist durch wenigstens zwei Bereiche mit unterschiedlichen Querschnitten charakterisiert. Vorzugsweise wird die teilelastische Federeinheit 2 derart ausgeführt, dass die Bereiche unterschiedlicher Querschnitte symmetrisch angeordnet sind, so dass in Einbaulage in einer Kreuzgelenkanordnung 1 die Funktion unabhängig von der Drehrichtung der Kreuzgelenkanordnung 1 gewährleistet ist. Im Leerlauf, d. h. unbelastetem Zustand, ist diese spielfrei. Im belastetem Zustand wird ein teilelastischer Formschluss erzielt. Dazu weist die teilelastische Federeinheit 2, bezogen auf eine sich durch den theoretischen Mittelpunkt M erstreckende erste Symmetrielinie S_{D}, zwei symmetrisch zueinander angeordnete Bereiche 29 und 30 auf, welche die formschlüssig sich anschmiegenden Tragbereiche bzw. Abstützbereiche für das Axiallager 17, insbesondere die Gleitflächen bildenden Elemente 21 und 22 des Axiallagers 17 im belasteten Zustand unter Wirkung der Umfangskraft bilden. Diese Abstützbereiche 29 und 30 sind symmetrisch zueinander angeordnet und hinsichtlich der Geometrie des Querschnittes identisch ausgeführt. Die Abstützbereiche 29 und 30 erstrecken sich dabei in Umfangsrichtung der teilelastischen Federeinheit 2, vorzugsweise in einem bestimmten Abstand c in Umfangsrichtung betrachtet von der Symmetrielinie S_{D}. Die Ausgestaltung der Abstützbereiche 29, 30 weist ferner zu einer senkrecht zur Symmetrieachse S_{D} durch den Mittelpunkt gehenden Achse S_{DS} ebenfalls einen symmetrischen Aufbau auf. Diese Abstützbereiche 29 und 30 werden auch als teilaktive Abstützbereiche bezeichnet. Ferner sind Abstützbereiche 31 und 32 vorgesehen. Diese erstrecken sich gleichmäßig in Umfangsrichtung der elastischen Federeinheit 2 betrachtet von der Symmetrielinie S_{DS} über eine Abmessung a. Dabei erfolgt im Bereich der Abmessung a in Umfangsrichtung ausgehend von der Symmetrieachse S_{DS} jeweils der Übergang zu den unter Belastung stärker beanspruchten Bereichen 29 und 30. Die Abstützbereiche 31 und 32 sind dabei gegenüber den teilaktiven Bereichen 29 und 30 jeweils durch eine Querschnittsverstärkung, insbesondere in Höhenrichtung der teilelastischen Federeinheit 2, charakterisiert. D. h., die Dickenabmessungen sind in diesem Bereich größer. Dies gilt sowohl wenigstens für die Höhenabmessung als auch für die Breitenabmessung d in diesen Bereichen. D. h., dass die den Querschnitt charakterisierenden Abmaße in Höhenrichtung h größer sind als in den Bereichen 29 und 30, welche ebenfalls symmetrisch bezogen zur Symmetrieachse S_{D} angeordnet sind. Dabei ist es unerheblich, welche der beiden Stirnflächen 33 oder 34 in Einbaulage als Abstützfläche für das Axiallager 17 fungiert und welche der Stirnflächen 33 oder 34 sich am Zapfenkreuz 3 abstützt. Vorzugsweise wird die elastische Federeinheit 2 derart ausgestaltet, dass diese lediglich im Hinblick auf eine Zentrierung in Umfangsrichtung eingebaut werden muss, nicht jedoch hinsichtlich der Anordnung bzw. Ausrichtung der Stirnflächen 33 und 34. Der Einbau in die Kreuzgelenkanordnung gemäß Figur 1 erfolgt nun derart, dass die Abstützbereiche 29 und 30 jeweils in Umfangsrichtung, d. h. Rotationsrichtung, des Zapfenkreuzes 3 angeordnet sind, d.h. die Symmetrieachse S_{D} liegt in einer Ebene, welche durch die Zapfenachse Z₄,₅ und z eine Senkrechte zu dieser sowie zur Gelenkachse G bzw. der Zapfenachse Z₄,₅ und der Zapfenachse der senkrecht zu dieser angeordneten Zapfen ist. Die Senkrechte S_{DS} zur Symmetrieachse S_{D} der teilelastischen Federeinheit 2 verläuft dabei senkrecht zu der durch die und Zapfenachse Z und Z₄,₅ beschriebenen Ebene. Dadurch werden die durch die Querbeschleunigung entstehenden Axialkräfte, welche in Richtung der Zapfenachse Z_{4,5} von der Gelenkachse G weg, hier beispielsweise in Richtung der Gelenkgabelhälfte 6.2, wirken, zu einer Belastung des in dieser Richtung liegenden Axiallagers 17 und zur Entlastung des in Zapfenachsrichtung entgegen der Wirkungsrichtung der Axialkräfte auf der Seite der Gelenkgabelhälfte 6.1 liegenden Axiallagers 17 führen. Das entlastete Lager kann in diesem Betriebszustand auch als passives Lager und das belastete als aktives Lager bezeichnet werden. Dabei bewirkt eine in Richtung der Zapfenachse Z_{4,5} zur zweiten Gelenkgabelhälfte 6.2 von der Gelenkachse G weg wirkende Axialkraft eine axiale Verschiebung des Außenringes 14 des Radiallagers 13, wodurch das Axiallager 17 entlastet wird. Es erfolgt dabei keine Kraftübertragung über das zur Lagerung des Zapfens in der Gelenkgabelhälfte 6.1 vorgesehene Axiallager. An der gegenüberliegenden Gelenkgabelhälfte, der Gelenkgabelhälfte 6.2 wird der Außenring des Radiallagers 13 einer Druckbeanspruchung unterzogen. Die Axialkraft stützt sich dann aufgrund der teilelastischen Federeinheit 2 gleichmäßig über den auf Druck beanspruchten äußeren Bund des Radiallagers auf der Gelenkgabelhälfte ab.

Die Verformung der Drehmoment übertragenden Bauteile einer Kreuzgelenkanordnung 1 ist in Umfangsrichtung der Kraft dabei derart extrem, dass es in der Lagerung zu einer ungleichmäßigen Kraftverteilung kommt und nur ein Bruchteil der möglichen Tragzahl genutzt wird. Die dabei fehlende Planparallelität der Axiallagerlaufbahnen bzw. Gleitflächen bewirkt in der Regel eine vorzeitige Ermüdung bzw. Verschleiß dieser und bei Verwendung von Wälzkörpern eine plastische Verformung mit ihren Folgen. Andererseits werden aber die zugesicherten dynamischen und statischen Tragzahlen der Lager durch die Lagerherstellung nur in einer sehr steifen Lageranschlusskonstruktion garantiert. Um die Planparallelität der Gleitflächen bildenden Elemente 21 und 22 zu gewährleisten, ist die teilelastische Federeinheit 2 derart integriert, dass diese unter Belastung immer gegeben ist. Aufgrund der teilelastischen Ausführung ist im Abstützbereich 29 und 30, dem Bereich der stärksten Verformung, immer eine Abstützung gegeben, wobei aufgrund der in Umfangsrichtung verteilten unterschiedlichen elastischen Ausführungen der teilelastischen Federeinheit 2 ein flächiges Anlegen der teilelastische Federeinheit 2 an den Druckring 23, insbesondere die zu diesem gerichtete Fläche 35, gegeben ist. Die erfindungsgemäße Lösung ist dadurch charakterisiert, dass die teilelastische Federeinheit 2 im Leerlauf nahezu spielfrei ist und einen teilelastischen Formfluss ermöglicht. Der Flächentraganteil wird aufgrund der Verstärkung der Abstützbereiche in den Bereichen hoher Lastwirkung und mit dem Einfluss der Umfangskraft erhöht. In den Bereichen, wo die Verformung klein ist, ist eine starre Ausführung vorgesehen, während in Bereichen, wo die Verformung auftritt, eine weiche Lösung vorgesehen ist. Die Abstützbereiche 29 und 30 sind dabei in Umfangsrichtung betrachtet in den Bereichen hoher Axialkräfte angeordnet.

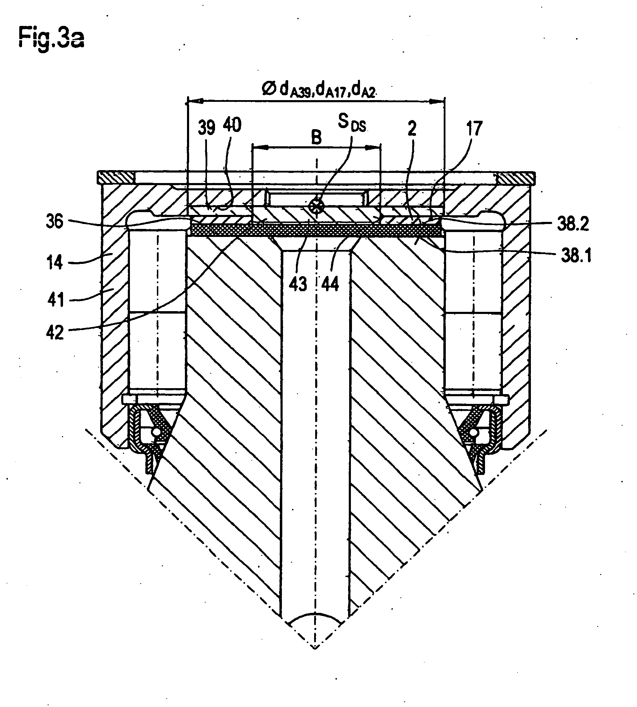

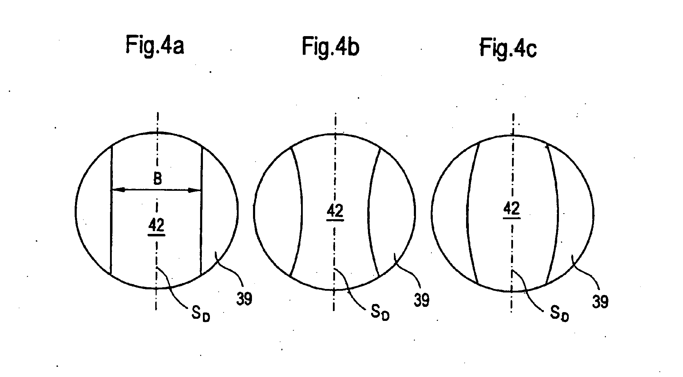

Die Figur 3a verdeutlicht eine erste Ausführung der Anordnung des Ausgleichselementes in Form der teilelastischen Federeinheit 2 für eine Anordnung des Axiallagers 17 an der Zapfenstirnseite 36. Bei dieser Ausführung ist das Axiallager 17, insbesondere das dieses bildende scheibenförmige Element 20, derart an der Zapfenstirnseite angeordnet, dass dieses mit seiner Gleitfläche 38.1 an der Zapfenstirnseite 36 anliegt. Die andere Gleitfläche 38.2 stützt sich am Ausgleichselement 2 ab. Die Abstützung erfolgt dann über das Ausgleichselement in Form der teilelastischen Federeinheit 2 und ein Zentrierelement 39 am Innenumfang 40 einer den Außenring 14 des Radiallagers bildenden Buchse 41. Über diese erfolgt beim Einbau in die Gelenkgabel 6 die Abstützung an dieser. Das Zentrierelement 39 ist hier als scheibenförmiges Element ausgeführt, welches einen Vorsprung 42 aufweist, der sich in den vom ringförmigen Element in Form der teilelastischen Federeinheit 2 gebildeten Innenraum 43 erstreckt und vorzugsweise an der Innenkontur 44 der teilelastischen Federeinheit 2 flächig, vorzugsweise unter Spiel, anliegt. Im dargestellten Fall ist der Außendurchmesser d_{A39} derart gewählt, dass dieser mit dem Außendurchmesser d_{A}17 des Axiallagers korrespondiert. Dies gilt in Analogie auch für den Außendurchmesser d_{A2} der teilelastischen Federeinheit 2. Der Vorsprung 42 ist durch eine Breite B charakterisiert. Diese erstreckt sich über die gesamte Ausdehnung des Zentrierelementes 39, vorzugsweise entlang der in Einbaulage mit der Symmetrieachse S_{DS} des teilelastischen Federelementes zusammenfallenden Symmetrieachse S_{DS}. Andere Geometrien sind denkbar, beispielsweise eine konvexe oder konkave Gestaltung oder aber eine mehreckige Geometrie, wobei in diesem Fall die Innenkontur 44 der teilelastischen Federeinheit 2 entsprechend anzupassen wäre. Mögliche Vorsprungsgestaltungen sind in Figur 4 wiedergegeben.

Die Figuren 4a bis 4c verdeutlichen mögliche Ausführungen zur Realisierung der Zentrierfunktion. Das Zentrierelement 39 kann dabei von einem separaten, vorzugsweise kreisförmigen Element gebildet werden oder direkt vom Lageranschlusselement Gelenkgabel zapfen. Diese weisen Abstützbereiche in form von Vorsprüngen 42 auf, die durch Zusammenwirken mit von komplementären Ausnehmungen bzw. einer komplementären Ausführung der Innenkontur der Ausgleichselemente 2 zusammenwirken..Daran wird ersichtlich, dass der Abstützbereich sich vorzugsweise jeweils über die gesamte Erstreckung parallel zur Symmetrieachse S_{D} erstreckt. Die Figur 4a verdeutlicht dabei eine Ausführung mit konstanter Breite B, während Figur 4b eine Ausführung mit konkaver und Figur 4c eine Ausführung mit konvexer Geometrie wiedergibt. Andere Geometrien sind denkbar.

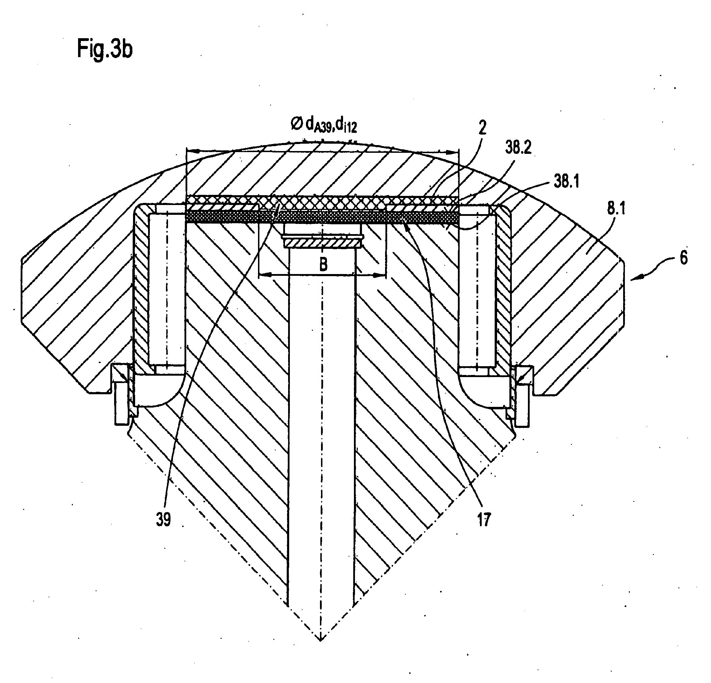

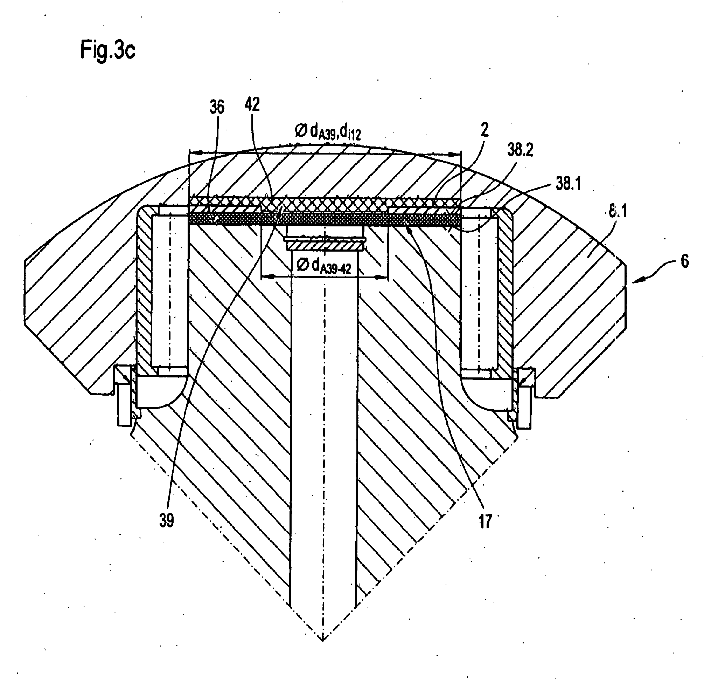

Die Figur 3b verdeutlicht eine Ausführung gemäß Figur 3a, wobei jedoch das Axiallager 17 sich über die teilelastische Federeinheit 2 und das Zentrierelement 39 direkt an der Gelenkgabel 6, insbesondere dem Lagerteil 8, abstützt. Auch hier liegt die Gleitfläche 38 direkt an der Zapfenstirnseite 36 auf. Die gegenüberliegende Gleitfläche stützt sich dabei direkt über das Federelement 2 an der Gelenkgabel 6, insbesondere dem Lagerteil 8.1, ab zwischengeschaltet oder einteilig mit diesem ausgeführt ist ein Zentrierelement 39. Der Außendurchmesser d_{A39} des Zentrierelementes ist dabei an den Innendurchmesser dᵢ₁₂ der Lagerbohrung angepasst. Auch hier ist zur sicheren Bestimmung der Einbaulage das Zentrierelement 39 mit einem Vorsprung 42 vorgesehen, der nicht rotationssymmetrisch ausgeführt ist, sondern eine Lagerorientierung des Ausgleichselementes in Form der teilelastischen Federeinheit 2 ermöglicht. Der Vorsprung 42 kann dabei, wie bereits für die Figur 3a ausgeführt, mit gleichem Querschnitt über die gesamte Erstreckung entlang einer Symmetrieachse des Zentrierelementes 39 ausgeführt werden. Denkbar ist ferner eine Ausführung mit beliebiger Geometrie, beispielsweise eine konvexe oder konkave Ausgestaltung oder eine Ausführung in Form eines Vieleckes. Das Zentrierelement 39 ist dabei zwischen der Gelenkgabel 6, insbesondere dem Lagerteil 8.1 und dem Ausgleichselement angeordnet. Demgegenüber verdeutlicht Figur 3c eine Ausgestaltung gemäß Figur 3b mit rotationssymmetrischem Vorsprung 42. Dieser ist durch einen Durchmesser d_{A39-42} charakterisiert.

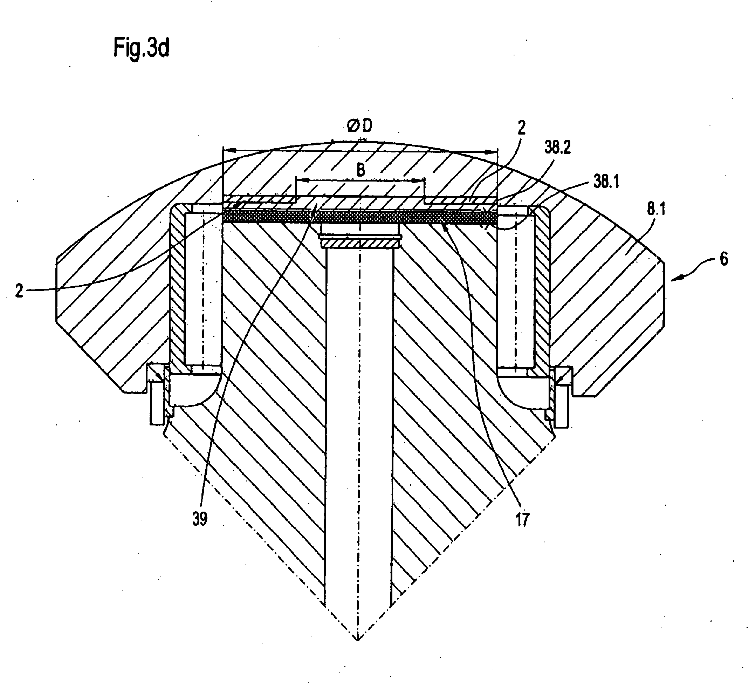

Demgegenüber verdeutlicht die Figur 3d eine alternative Anordnung der teilelastischen Federeinheit 2. Diese ist dabei zwischen dem Zentrierelement 39 und dem Lagerteil 8.1 angeordnet. Dies bedeutet, das Axiallager 17, insbesondere das scheibenförmige Element, stützt sich dabei über das Zentrierelement 39 und die teilelastische Federeinheit 2 in der Lagerbohrung 12 an der Gelenkgabel ab. Die Figur 3d verdeutlicht dabei eine Ausführung eines Zentrierelementes 39 mit nicht rotationssymmetrischem Vorsprung 42. Dieser ist durch eine Breite B über den gesamten Durchmesser betrachtet charakterisiert. Zur Gewährleistung der Funktion ist dabei jedoch das Zentrierelement als scheibenförmiges Element mit geringer Dicke d ausgeführt.

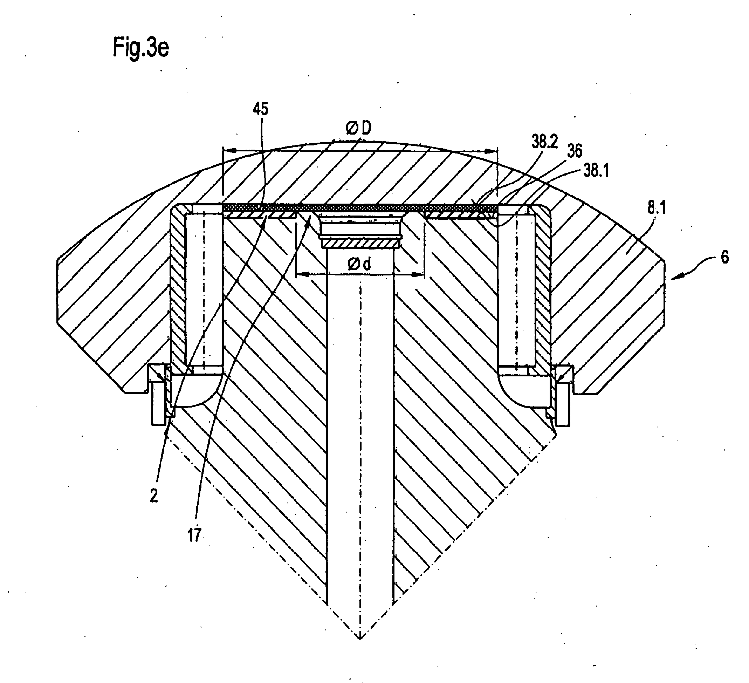

Bei allen Ausführungen gemäß Figur 3a bis 3d stützt sich die Gleitfläche 38.1 an der Zapfenstirnseite direkt ab. Demgegenüber verdeutlicht Figur 3e eine Ausführung mit Abstützung der Gleitfläche 38.1 über das Ausgleichselement 2 an der Zapfenstirnseite und eine Abstützung von 38.2 direkt an der Gelenkgabel 6.

Die Figur 3e verdeutlicht eine weitere Ausführung der Anordnung des Axiallagers 17 an der Zapfenstirnseite 36. Diese stützt sich über die teilelastische Federeinheit 2 an der Zapfenstirnseite 36 ab. Dies bedeutet, die Gleitfläche 38.1 stützt sich dabei über die teilelastische Federeinheit 2 an der Stirnseite 36 des Zapfens ab, während die gegenüberliegende Gleitfläche 38.2 direkt an der Innenfläche 45 der Lagerbohrung 12, insbesondere der Gelenkgabel 6, anliegt. Die Ausführung gemäß Figur 3d ist frei von einem separaten Zentrierelement. Diese Zentrierfunktion wird vom Zapfen, insbesondere einer entsprechenden Ausgestaltung der Zapfenstirnseite 36 übernommen. Hier wird ein kreisrunder Vorsprung 42 gebildet. Demgegenüber verdeutlicht die Figur 3e eine Ausführung gemäß Figur 3d mit Zentrierelement, wobei dieses direkt von der Gelenkgabel 6, insbesondere dem Lagerteil 8.1, gebildet wird. Der Vorsprung 42 ist hier direkt in die Gelenkgabelhälfte bzw. den Lagerteil 8.1 durch entsprechende Ausgestaltung der Lagerbohrung eingearbeitet. Der Vorsprung 42 ist dabei durch einen kreisrunden Querschnitt charakterisiert.

Die Figuren 3a bis 3e verdeutlichen beispielhaft Möglichkeiten der Anordnung der einzelnen Elemente der Axiallager 17 sowie der Anschlusselemente zueinander, insbesondere unter Zwischenschaltung eines. Diese Möglichkeiten sind Beispiele. Die erfindungsgemäße Lösung ist dabei nicht auf diese beschränkt. Ferner ist jede beliebige Reihenfolge von Zentrierelement, Ausgleichselement und Axialgleitlager möglich.

Bezüglich der Wahl der einzelnen Querschnittsverlaufe bestehen eine Vielzahl von Möglichkeiten. Vorzugsweise werden jedoch Querschnitte gewählt, die durch die Ausbildung ebener Flächen charakterisiert sind. Dies bedeutet, dass vorzugsweise rechteckige oder quadratische Querschnitte zum Einsatz gelangen. Lediglich die Übergangsbereiche sind dann durch eine andere Querschnittskonfiguration charakterisiert.

## Patentansprüche

1. Kreuzgelenkanordnung (1)
mit einem, in zwei zueinander um 90° versetzt zueinander angeordneten Gelenkgabeln (6) gelagerten Zapfenkreuz (3);
jede Gelenkgabel umfasst einen Flanschteil (7) und zwei Lagerteile (8, 9), wobei jeder Lagerteil (8, 9) eine Lagerbohrung aufweist, in welcher die Zapfen des Zapfenkreuzes (3) gelagert sind;
jeder Zapfen (4, 5) ist mittels einer Lageranordnung (10, 11) gelagert;
die Lageranordnung (10, 11) umfasst ein Radiallager (13) und ein im Bereich der Zapfenwurzel (18) oder der Zapfenstirnseite angeordnetes Axiallager (17);
das Axiallager (17) stützt sich wenigstens mittelbar oder direkt über ein Ausgleichselement in Form einer teilelastischen Federeinheit (2) am Zapfenkreuz (3) oder der Gelenkgabel (6) ab; **dadurch gekennzeichnet, dass** die teilelastische Federeinheit (2) durch in Umfangsrichtung einander benachbart angeordnete Bereiche aus unterschiedlichen Materialien oder Materialkombinationen charakterisiert ist, wobei die Materialien sich hinsichtlich ihres E-Moduls unterscheiden.

2. Kreuzgelenkanordnung (1) nach Anspruch 1, **dadurch gekennzeichnet, dass** die teilelastische Federeinheit (2) als ringförmiges Element ausgeführt ist, welches in Umfangsrichtung Bereiche unterschiedlicher Querschnittsgestaltung aufweist.

3. Kreuzgelenkanordnung (1) nach Anspruch 2, **dadurch gekennzeichnet, dass** die teilelastische Federeinheit durch die Anordnung von Bereichen unterschiedlicher Querschnitte in Umfangsrichtung charakterisiert ist, wobei die einzelnen einander benachbart angeordneten Querschnittsbereiche sich in der Geometrie des Querschnittes unterscheiden.

4. Kreuzgelenkanordnung (1) nach einem der Ansprüche 1 bis 3, **dadurch gekennzeichnet, dass** die teilelastische Federeinheit (2) im elastischen Bereich aus einem der nachfolgend genannten Materialien besteht:
- einem Federstahl
- einem Werkstoff mit einem Elastizitätsmodul von 5000 bis 50000 N/mm²
- einem Elastomer
- einem gummielastischen Werkstoff, insbesondere Kautschuk.

5. Kreuzgelenkanordnung (1) nach einem der Ansprüche 2 bis 4, **gekennzeichnet durch** die folgenden Merkmale:
das ringförmige Element umfasst zwei bezüglich einer ersten Symmetrieachse S_{D} symmetrisch angeordnete und mit dem gleichen Querschnitt versehene erste Abstützbereiche (31, 32), die gegenüber den angrenzenden und unter Belastung als teilaktive Abstützbereiche fungierenden Bereichen (29, 30) in Umfangsrichtung **durch** in Höhenrichtung und/oder Dickenrichtung des ringförmigen Elementes größere Abmessungen charakterisiert sind;
jeder der einzelnen Bereiche - erster Bereich und zweiter ausgeführter Abstützbereich (31, 32, 29, 30) ist hinsichtlich seines Verlaufs in Umfangsrichtung von der ersten Symmetrieachse bis zu einer weiteren zweiten, senkrecht zur ersten Symmetrieachse (S_{D}) verlaufenden zweiten Symmetrieachse (S_{DS}) hin betrachtet **durch** eine konstante Querschnittsausgestaltung charakterisiert.

6. Kreuzgelenkanordnung (1) nach Anspruch 5, **dadurch gekennzeichnet, dass** der Übergang zwischen einem ersten (31, 32) und einem zweiten Abstützbereich (29, 30) mit stetiger Querschnittsanpassung in Umfangsrichtung erfolgt.

7. Kreuzgelenkanordnung (1) nach einem der Ansprüche 1 bis 6, **dadurch gekennzeichnet, dass** das Axiallager (17) als Gleitlager (19) ausgeführt ist, wobei diesem in Richtung zur Gelenkachse (G) ein Druckring (23) zugeordnet ist, wobei das Gleitlager sich über die teilelastische Federeinheit (2) am Zapfenkreuz (3) abstützt.

8. Kreuzgelenkanordnung (1) nach einem der Ansprüche 1 bis 6, **dadurch gekennzeichnet, dass** das Axiallager (17) als Wälzlager ausgeführt ist, wobei die eine Lauffläche von einem Außen- oder Innenring des Radiallagers (13) gebildet wird, während die andere Lauffläche von einem Druckring (23) gebildet wird, der sich über die teilelastische Federeinheit (2) am Zapfenkreuz abstützt.

9. Kreuzgelenkanordnung (1) nach einem der Ansprüche 1 bis 8, **dadurch gekennzeichnet, dass** die Lagerbohrungen als Blindbohrungen ausgeführt sind.

10. Kreuzgelenkanordnung (1) nach einem der Ansprüche 1 bis 9, **dadurch gekennzeichnet, dass** die einzelne Gelenkgabel zweiteilig ausgeführt ist

11. Kreuzgelenkanordnung (1) nach einem der Ansprüche 1 bis 10, **dadurch gekennzeichnet, dass** die Zapfen (4, 5) des Zapfenkreuzes (3) in zwei zueinander parallelen und versetzt angeordneten Ebenen angeordnet sind.

12. Kreuzgelenkanordnung (1) nach einem der Ansprüche 1 bis 11, **dadurch gekennzeichnet, dass** in Einbaulage in Rotationsrichtung des Zapfenkreuzes betrachtet die Position der teilelastischen Federeinheit (2) derart erfolgt, dass der Querschnitt mit der stärksten Dickenverringerung in einer durch die Zapfenachsen der in der Gelenkgabel gelagerten Zapfen beschreibbaren Ebene liegt.

13. Kreuzgelenkanordnung (1) nach einem der Ansprüche 1 bis 12, **dadurch gekennzeichnet, dass** das Axiallager im Bereich der Zapfenwurzel angeordnet ist

14. Kreuzgelenkanordnung (1) nach Anspruch 13, **dadurch gekennzeichnet, dass** das Axiallager (17) sich über die teilelastische Federeinheit (2) und eine Druckscheibe an der Zapfenwurzel abstützt und ferner eine Gleitpaarung mit dem Außenring des Radiallagers bildet.

15. Kreuzgelenkanordnung (1) nach einem der Ansprüche 1 bis 12, **gekennzeichnet durch** die folgenden Merkmale:
das Axiallager (17) ist an der Zapfenstirnseite (36) angeordnet;
das Axiallager (17) stützt sich wenigstens mittelbar an der Stirnseite (36) des in der Gelenkgabelhälfte (8) gelagerten Zapfens und/oder der Gelenkgabel (6) ab.

16. Kreuzgelenkanordnung (1) nach Anspruch 15, **dadurch gekennzeichnet, dass** sich das Axiallager (17) über die teilelastische Federeinheit an der Stirnseite des Zapfens (36) abstützt.

17. Kreuzgelenkanordnung (1) nach einem der Ansprüche 15 oder 16, **dadurch gekennzeichnet, dass** sich das Axiallager (17) über die teilelastische Federeinheit (2) wenigstens mittelbar an der Gelenkgabelhälte (8.1) abstützt.

18. Kreuzgelenkanordnung (1) nach Anspruch 17, **dadurch gekennzeichnet, dass** die Abstützung des Axiallagers (17) am Innenumfang einer vom Außenring (14) des Radiallagers gebildeten Buchse erfolgt.

19. Kreuzgelenkanordnung (1) nach einem der Ansprüche 15 bis 18, **dadurch gekennzeichnet, dass** zwischen teilelastischer Federeinheit (2) und Anschlusselement in Form der Gelenkgabelhälfte (8.1) oder der Zapfenstimseite ein Zentrierelement (39) vorgesehen ist.

20. Kreuzgelenkanordnung (1) nach Anspruch 19, **dadurch gekennzeichnet, dass** das Zentrierelement (39) zwischen dem Außenring (14) des Radiallagers, welcher einen sich in radialer Richtung zur Zapfenachse erstreckenden Bund aufweist, und der teilelastischen Federeinheit (2) angeordnet ist.

21. Kreuzgelenkanordnung (1) nach einem der Ansprüche 19 und 20, **dadurch gekennzeichnet, dass** das Zentrierelement (39) scheibenförmig ausgeführt ist und einen in Richtung der teilelastischen Federeinheit (2) sich erstreckenden Vorsprung (42) aufweist, der rotationssymmetrisch ausgeführt ist und von der teilelastischen Federeinheit umschlossen ist.

22. Kreuzgelenkanordnung (1) nach einem der Ansprüche 15 bis 21, **dadurch gekennzeichnet, dass** das Zentrierelement scheibenförmig ausgeführt ist und einen in Richtung der teilelastischen Federeinheit (2) sich erstreckenden Vorsprung (42) aufweist, der komplementär zum Innenumfang (44) der ringförmigen teilelastischen Federeinheit (2) ausgeführt ist und eine beliebige Geometrie, bezogen auf die Symmetrieachse, aufweist.

23. Kreuzgelenkanordnung (1) nach Anspruch 22, **dadurch gekennzeichnet, dass** der Vorsprung (42) sich mit konstanter Breite über die Erstreckung es Zentrierelementes (39) erstreckt.

24. Kreuzgelenkanordnung (1) nach Anspruch 22, **dadurch gekennzeichnet, dass** der Vorsprung (42) konkav oder konvex ausgebildet ist.

25. Kreuzgelenkanordnung (1) nach einem der Ansprüche 19 bis 24, **dadurch gekennzeichnet, dass** das Zentrierelement (39) mit dem Anschlusselement Gelenkgabel (6) oder Zapfen einstückig ist.

## Claims

1. A cardan universal joint arrangement (1), comprising a journal cross (3) held in two yokes (6) which are arranged offset 90° relative to each other, each yoke comprising a flange part (7) and two bearing parts (8, 9), each bearing part (8, 9) comprising a bearing hole in which the journals of the journal cross (3) are held, each journal (4, 5) being held by means of a bearing arrangement (10, 11), the bearing arrangement (10, 11) comprising a radial bearing (13) and an axial bearing (17) arranged in the area of the journal root (18) or the face side of the journal, the axial bearing (17) supporting itself at least indirectly or directly via a balancing element in the form of a partly elastic spring unit (2) on the journal cross (3) or the yoke (6), **characterized in that** the partly elastic spring unit (2) is **characterized by** areas which are arranged adjacent to each other in the circumferential direction and are made of different materials or combinations of materials, with the materials differing concerning their modulus of elasticity.

2. A cardan universal joint arrangement (1) according to claim 1, **characterized in that** the partly elastic spring unit (2) is arranged as a ring-like element which has regions of different cross-sectional configurations in the circumferential direction.

3. A cardan universal joint arrangement (1) according to claim 2, **characterized in that** the partly elastic spring unit is **characterized by** the arrangement of regions of different cross sections in the circumferential direction, with the individual cross-sectional areas which are arranged adjacent to one another differ in the geometry of the cross section.

4. A cardan universal joint arrangement (1) according to one of the claims 1 to 3, **characterized in that** the partly elastic spring unit (2) consists in the elastic region of one of the following mentioned materials:
- a spring steel;
- a material with a modulus of elasticity of 5,000 to 50,000 N/mm²;
- an elastomer;
- rubber-elastic material, especially caoutchouc.

5. A cardan universal joint arrangement (1) according to one of the claims 2 to 4, **characterized by** the following features:
the ring-like element comprises two first support regions (31, 32) which are arranged symmetrically with respect to a first axis of symmetry S_{D} and are provided with the same cross section and which are **characterized by** dimensions which in the circumferential direction are larger in the direction of height and/or thickness as compared with the adjacent regions (29, 30) which act under load as partly active support regions;
each of the individual regions, namely first region and second implemented support region (31, 32, 29, 30) is **characterized by** a constant cross-sectional configuration concerning its progression in the circumferential direction from the first axis of symmetry to a further second axis of symmetry (S_{DS}) extending perpendicular to the first axis of symmetry (S_{D}).

6. A cardan universal joint arrangement (1) according to claim 5, **characterized in that** the transition between a first (31, 32) and a second support region (29, 30) occurs with a continuous cross-sectional adjustment in the circumferential direction.

7. A cardan universal joint arrangement (1) according to one of the claims 1 to 6, **characterized in that** the axial bearing (17) is arranged as a slide bearing (19), with the same being associated with a compression ring (23) in the direction towards the joint axis, with the slide bearing resting on the journal cross (3) via the partly elastic spring unit (2).

8. A cardan universal joint arrangement (1) according to one of the claims 1 to 6, **characterized in that** the axial bearing (17) is arranged as a roller bearing, with the one bearing surface being formed by an outside or inside ring of the radial bearing (13), whereas the other bearing surface is formed by a compression ring (23) which rests on the journal cross via the partly elastic spring unit (2).

9. A cardan universal joint arrangement (1) according to one of the claims 1 to 8, **characterized in that** the bearing holes are arranged as blind holes.

10. A cardan universal joint arrangement (1) according to one of the claims 1 to 9, **characterized in that** the only yoke is provided with a two-part configuration.

11. A cardan universal joint arrangement (1) according to one of the claims 1 to 10, **characterized in that** the journals (4, 5) of the journal cross (3) are arranged in two planes which are parallel and offset relative to each other.

12. A cardan universal joint arrangement (1) according to one of the claims 1 to 11, **characterized in that** the position of the partly elastic spring unit (2) occurs in the installed position in the rotational direction of the journal cross in such a way that the cross section with the largest reduction in thickness lies in a plane as described by the journal axes of the journals held in the yoke.

13. A cardan universal joint arrangement (1) according to one of the claims 1 to 12, **characterized in that** the axial bearing is arranged in the area of the journal root.

14. A cardan universal joint arrangement (1) according to one of the claims 1 to 13, **characterized in that** the axial bearing (17) rests on the journal root via the partly elastic spring unit (2) and a compression disk and further forms a slide pairing with the outside ring of the radial bearing.

15. A cardan universal joint arrangement (1) according to one of the claims 1 to 12, **characterized by** the following features:
the axial bearing (17) is arranged on the face side (36) of the journal;
the axial bearing (17) rests at least indirectly on the face side (36) of the journal held in the yoke half (8) and/or the yoke (6).

16. A cardan universal joint arrangement (1) according to claim 15, **characterized in that** the axial bearing (17) rests on the face side of the journal (36) by way of the partly elastic spring unit.

17. A cardan universal joint arrangement (1) according to one of the claims 15 or 16, **characterized in that** the axial bearing (17) rests at least indirectly on the yoke half (8.1) by way of the partly elastic spring unit (2).

18. A cardan universal joint arrangement (1) according to claim 17, **characterized in that** the support of the axial bearing (17) occurs on the inner circumference of a sleeve formed by the outside ring (14) of the radial bearing.

19. A cardan universal joint arrangement (1) according to one of the claims 15 to 18, **characterized in that** a centering element (39) is provided between the partly elastic spring unit (2) and the connection element in the form of the yoke half (8.1) or the face side of the journal.

20. A cardan universal joint arrangement (1) according to claim 19, **characterized in that** the centering element (39) is arranged between the outside ring (14) of the radial bearing which comprises a collar extending in the radial direction of the journal axis and the partly elastic spring unit (2).

21. A cardan universal joint arrangement (1) according to one of the claims 19 to 20, **characterized in that** the centering element (39) is arranged in a disk-like way and comprises a projection (42) which extends in the direction of the partly elastic spring unit (2) and is arranged in a rotational-symmetrical way and is enclosed by the partly elastic spring unit.

22. A cardan universal joint arrangement (1) according to one of the claims 15 to 21, **characterized in that** the centering element is arranged in a disk-like way and comprises a projection (42) which extends in the direction of the partly elastic spring unit (2) and is arranged in a complementary manner to the inside circumference (44) of the annular, partly elastic spring unit (2) and has a random geometry relating to the axis of symmetry.

23. A cardan universal joint arrangement (1) according to claim 22, **characterized in that** the projection (42) extends with constant width over the extension of the centering element (39).

24. A cardan universal joint arrangement (1) according to claim 22, **characterized in that** the projection (42) has a concave or convex arrangement.

25. A cardan universal joint arrangement (1) according to one of the claims 19 to 24, **characterized in that** the centering element (39) is arranged integrally with the connection element, yoke (6) or journal.

## Revendications

1. Agencement (1) d'un joint de cardan
avec un bloc croisillon (3) monté dans deux fourchettes (6) décalées de 90° l'une par rapport à l'autre ;
chaque fourchette du joint comprenant une partie formant bride (7) et deux parties formant palier (8, 9), chaque partie formant palier (8, 9) comportant un trou dans lequel sont portées les fusées du bloc croisillon (3);
chaque fusée (4, 5) étant portée au moyen d'un agencement de roulements (10, 11) ;
l'agencement de roulements (10, 11) comprend un roulement radiall (13) et un roulement axial (17) disposé dans la région de la racine (18) de la fusée ou de la face frontale de la fusée ;
le roulement axial (17) prend appui du moins indirectement ou directement, par l'intermédiaire d'un élément d'égalisation sous forme d'unité formant ressort (2) en partie élastique, contre le bloc croisillon (3) ou contre la fourchette (6) du joint ;
**caractérisé en ce que** l'unité formant ressort (2) partiellement élastique est
**caractérisée par** des zones voisines suivant la direction circonférentielle réalisées en différents matériaux ou combinaisons de matériaux se distinguant par leur module d'élasticité.

2. Agencement d'un joint de cardan (1) selon la revendication 1, **caractérisé en ce que** l'unité formant ressort (2) partiellement élastique est réalisée sous forme d'élément annulaire comportant suivant la direction circonférentielle des sections de différentes formes.

3. Agencement d'un joint de cardan (1) selon la revendication 2, **caractérisé en ce que** l'unité formant ressort partiellement élastique est **caractérisée par** l'agencement de zones de sections différentes suivant la direction circonférentielle, les différentes zones voisines l'une de l'autre se distinguant par la géométrie de leur section.

4. Agencement d'un joint de cardan (1) selon l'une quelconque des revendications 1 à 3, **caractérisé en ce que**, dans sa partie élastique, l'unité formant ressort (2) partiellement élastique est réalisée dans un des matériaux suivants :
- un acier ressort,
- un matériau ayant un module d'élasticité compris entre 5000 et 50000 N/mm²
- un élastomère
- un matériau présentant l'élasticité du caoutchouc, notamment du caoutchouc.

5. Agencement d'un joint de cardan (1) selon l'une quelconque des revendications 2 à 4, **caractérisé par** les particularités suivantes :
l'élément annulaire comprend deux premières zones d'appui (31, 32) de section identique disposées symétriques par rapport à un premier axe de symétrie Sₚ qui, par rapport aux zones (29, 30) adjacentes faisant office de zones d'appui partiellement actives lorsque soumises à une contrainte, sont **caractérisées** suivant la direction circonférentielle par des dimensions supérieures dans le sens de la hauteur et/ou de l'épaisseur de l'élément annulaire ;
chacune des différentes zones - première zone et deuxième zone de soutien (31, 32, 29, 30) réalisée - est **caractérisée en** termes d'orientation par une section constante, vue suivant la direction circonférentielle depuis le premier axe de symétrie jusqu'à un deuxième axe de symétrie (Sₚₛ) supplémentaire, perpendiculaire au premier axe de symétrie (Sₚ).

6. Agencement d'un joint de cardan (1) selon la revendication 5, **caractérisé en ce que** la transition entre une première (31, 32) et une deuxième zone d'appui (29, 30) est réalisée par une adaptation continue de la section suivant la direction circonférentielle.

7. Agencement d'un joint de cardan (1) selon l'une quelconque des revendications 1 à 6, **caractérisé en ce que** le roulement axial (17) est réalisé sous forme de palier glissant (19), un rondelle de butée (23) étant associée à celui-ci dans le sens de l'axe du joint (G), le palier glissant prenant appui sur le bloc croisillon (3) par l'intermédiaire de l'unité formant ressort (2) partiellement élastique.

8. Agencement d'un joint de cardan (1) selon l'une quelconque des revendications 1 à 6, **caractérisé en ce que** le roulement axial (17) est réalisé sous forme de roulement à rouleaux, l'une des surfaces de roulement étant formée par une bague externe ou interne du roulement radial (13) tandis que l'autre surface de roulement est formée par une rondelle de butée (23) qui prend appui sur le bloc croisillon par l'intermédiaire de l'unité formant ressort (2) partiellement élastique.

9. Agencement d'un joint de cardan (1) selon l'une quelconque des revendications 1 à 8, **caractérisé en ce que** les trous de roulement sont réalisés sous forme de trous borgnes.

10. Agencement d'un joint de cardan (1) selon l'une quelconque des revendications 1 à 9, **caractérisé en ce que** chaque fourchette du joint est réalisée en deux parties.

11. Agencement d'un joint de cardan (1) selon l'une quelconque des revendications 1 à 10, **caractérisé en ce que** les fusées (4, 5) du bloc croisillon (3) sont disposées dans deux plans parallèles et décalés l'un par rapport à l'autre.

12. Agencement d'un joint de cardan (1) selon l'une quelconque des revendications 1 à 11, **caractérisé en ce que**, vue dans une position de montage dans le sens de rotation du bloc croisillon, la position de l'unité formant ressort (2) partiellement élastique est telle que la section la plus amincie se situe dans un plan susceptible d'être décrit par les axes des fusées portées dans la fourchette.

13. Agencement d'un joint de cardan (1) selon l'une quelconque des revendications 1 à 12, **caractérisé en ce que** le roulement axial est disposé à la hauteur de la racine de la fusée.

14. Agencement d'un joint de cardan (1) selon la revendication 13, **caractérisé en ce que** le roulement axial (17) prend appui sur la racine de la fusée par l'intermédiaire de l'unité formant ressort (2) partiellement élastique et d'une rondelle de butée et forme par ailleurs un couple de glissement avec la bague externe du roulement radial.

15. Agencement d'un joint de cardan (1) selon l'une quelconque des revendications 1 à 12, **caractérisé par** les particularités suivantes :
le roulement axial (17) est disposé sur la face frontale de la fusée (36) ;
le roulement axial (17) prend appui du moins indirectement sur la face frontale (36) de la fusée portée dans la moitié de fourchette (8) et/ou de la fourchette (6) du joint.

16. Agencement d'un joint de cardan (1) selon la revendication 15, **caractérisé en ce que** le roulement axial (17) prend appui contre la face frontale de la fusée (36) par l'intermédiaire de l'unité formant ressort partiellement élastique.

17. Agencement d'un joint de cardan (1) selon l'une quelconque des revendications 15 ou 16, **caractérisé en ce que** le roulement axiall (17) prend appui du moins indirectement contre la moitié de fourchette (8.1) par l'intermédiaire de l'unité formant ressort (2).

18. Agencement d'un joint de cardan (1) selon la revendication 17, **caractérisé en ce que** le roulement axial (17) prend appui sur la circonférence interne d'un manchon formé par la bague externe (14) du roulement radial.

19. Agencement d'un joint de cardan (1) selon l'une quelconque des revendications 15 à 18, **caractérisé en ce qu'**un élément de centrage (39) est prévu entre l'unité formant ressort (2) partiellement élastique et l'élément de raccordement sous forme de la moitié de fourchette (8.1) ou de la face frontale de la fusée.

20. Agencement d'un joint de cardan (1) selon la revendication 19, **caractérisé en ce que** l'élément de centrage (39) est interposé entre la bague externe (14) du roulement radial qui comporte une collerette s'étendant vers l'axe de la fusée dans le sens radial et l'unité formant ressort (2) partiellement élastique.

21. Agencement d'un joint de cardan (1) selon l'une quelconque des revendications 19 et 20, **caractérisé en ce que** l'élément de centrage (39) est réalisé sous forme de disque et comporte une saillie (42) symétrique de révolution qui s'étend en direction de l'unité formant ressort (2) partiellement élastique et est enserrée par l'unité formant ressort partiellement élastique.

22. Agencement d'un joint de cardan (1) selon l'une quelconque des revendications 15 à 21, **caractérisé en ce que** l'élément de centrage est réalisé sous forme de disque et comporte une saillie (42) qui s'étend en direction de l'unité formant ressort (2) partiellement élastique, est complémentaire à la circonférence interne (44) de l'unité formant ressort (2) annulaire partiellement élastique et comporte une géométrie quelconque par rapport à l'axe de symétrie.

23. Agencement d'un joint de cardan (1) selon la revendication 22, **caractérisé en ce que** la saillie (42) s'étend avec une largeur constante sur toute la longueur sur laquelle s'étend l'élément de centrage (39).

24. Agencement d'un joint de cardan (1) selon la revendication 22, **caractérisé en ce que** la saillie (42) présente une forme concave ou convexe.

25. Agencement d'un joint de cardan (1) selon l'une quelconque des revendications 19 à 24, **caractérisé en ce que** l'élément de centrage (39) est réalisé d'un seul tenant avec l'élément de raccordement, la fourchette (6) du joint ou la fusée.
